(19) Europäisches Patentamt — European Patent Office — Office européen des brevets

(11) **EP 2 013 959 B1**

(12) **EUROPÄISCHE PATENTSCHRIFT**

(45) Veröffentlichungstag und Bekanntmachung des Hinweises auf die Patenterteilung:
**30.11.2011 Patentblatt 2011/48**

(51) Int Cl.:
***H02J 9/02*** *(2006.01)*

(21) Anmeldenummer: **07724164.4**

(22) Anmeldetag: **11.04.2007**

(86) Internationale Anmeldenummer:
**PCT/EP2007/003223**

(87) Internationale Veröffentlichungsnummer:
**WO 2007/121860 (01.11.2007 Gazette 2007/44)**

(54) **NOTLICHTGERÄT ZUM BETREIBEN EINER LICHTQUELLE, INSBESONDERE EINER LED**

EMERGENCY LIGHTING DEVICE FOR OPERATING A LIGHT SOURCE, IN PARTICULAR AN LED

APPAREIL DE LUMIÈRE DE SECOURS POUR LE FONCTIONNEMENT D'UNE SOURCE LUMINEUSE, EN PARTICULIER UNE DEL

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **21.04.2006 DE 102006018531**
**03.07.2006 DE 102006030655**

(43) Veröffentlichungstag der Anmeldung:
**14.01.2009 Patentblatt 2009/03**

(60) Teilanmeldung:
**10168858.8 / 2 249 458**

(73) Patentinhaber: **Tridonic GmbH & Co KG**
**6851 Dornbirn (AT)**

(72) Erfinder:
• **ROHNER, Daniel**
**1220 Wien (AT)**
• **MAIR, Alexander**
**1220 Wien (AT)**

(74) Vertreter: **Rupp, Christian**
**Mitscherlich & Partner**
**Patent- und Rechtsanwälte**
**Sonnenstraße 33**
**80331 München (DE)**

(56) Entgegenhaltungen:
| | |
|---|---|
| EP-A- 1 507 327 | EP-A1- 1 202 428 |
| GB-A- 2 382 238 | US-A- 5 847 550 |
| US-A1- 2006 001 381 | US-A1- 2006 066 258 |
| US-A1- 2006 082 332 | US-B1- 6 502 044 |
| US-B1- 6 502 044 | US-B1- 7 015 654 |
| US-E1- R E38 183 | |

• MARCOS ALONSO J ET AL: "A Microcontroller-Based Emergency Ballast for Fluorescent Lamps" IEEE TRANSACTIONS ON INDUSTRIAL ELECTRONICS, IEEE SERVICE CENTER, PISCATAWAY, NJ, US, Bd. 44, Nr. 2, April 1997 (1997-04), XP011023247 ISSN: 0278-0046
• RICO-SECADES M ET AL: "Evaluation of a low cost permanent emergency lighting system based on high efficiency LEDs", CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US, vol. 1, 12 October 2003 (2003-10-12), pages 542-546, XP010676072, DOI: DOI:10.1109/IAS. 2003.1257553 ISBN: 978-0-7803-7883-4

**Beschreibung**

Die vorliegende Erfindung betrifft ein Notlichtgerät gemäß dem Oberbegriff des Anspruchs 1, welches zum Betreiben einer Lichtquelle, insbesondere einer LED vorgesehen ist.

Notlichtgeräte sind unerlässlich, um in größeren Gebäuden oder Komplexen Beleuchtungssysteme zu realisieren, welche auch im Falle des Ausfalls der allgemeinen Netzversorgung eine ausreichende Beleuchtung zur Verfügung stellen. Nur dann, wenn im Falle des Ausfalls der Stromversorgung oder anderen Notfällen bestimmte relevante Räumlichkeiten oder Bereiche nach wie vor ausgeleuchtet werden, können Evakuierungs- oder Hilfsmaßnahmen sicher durchgeführt werden. Dementsprechend werden derartige Notlichtgeräte insbesondere zum Ausleuchten von Fluchtwegen und dergleichen eingesetzt.

Notlichtgeräte der gattungsgemäßen Art weisen dementsprechend als zentrales Element eine Energiespeichereinheit, insbesondere eine Batterie bzw. einen Akkumulator auf, welche während eines Normal- bzw. Ladebetriebs durch die allgemeine Netzversorgungsspannung aufgeladen wird. Hierzu ist eine Ladeschaltung vorgesehen, welche eingangsseitig mit der Netzversorgungsspannung verbunden ist und während des Ladebetriebs der Energiespeichereinheit permanent Energie zuführt, welche diese speichert. Erst im Falle des Auftretens eines Notzustands, der von derartigen Geräten durch eine Überwachung der Netzversorgungsspannung üblicherweise selbständig erkannt wird, wird in einen Notlichtbetrieb gewechselt, in dem die Lichtquelle aktiviert und betrieben wird, wozu - sofern erforderlich - die von der Energiespeichereinheit zur Verfügung gestellte Energie genutzt wird. Da die Speicherkapazität der Energiespeichereinheit selbstverständlich begrenzt ist, werden vorzugsweise Lichtquellen eingesetzt, welche verhältnismäßig wenig Energie verbrauchen. Dementsprechend werden derartige Notlichtgeräte bevorzugt mit Gasentladungslampen, insbesondere Leuchtstoffröhren ausgestattet. Zunehmend finden allerdings auch Lichtquellen in Form von lichtemittierenden Halbleitern, insbesondere LEDs Verwendung, da auch diese Lichtquellen einen hohen Wirkungsgrad aufweisen und dementsprechend energiesparend eingesetzt werden können.

Die Überwachung der Netzversorgungsspannung, welche also vorgenommen wird, um rechtzeitig einen Notlichtbetrieb veranlassen zu können, erfolgt üblicherweise durch eine Steuereinheit, welche ihr zugeführte Signale auswertet und anhand dieser Signale den Zustand der Netzversorgungsspannung beurteilt. Bei bekannten Schaltungen wird hierzu in naheliegender Weise die Netzversorgungsspannung selbst gemessen. Hieraus ergibt sich dann allerdings das Problem, dass die Sensorik zum Ermitteln des Zustands der Netzversorgungsspannung auf Netzpotential liegt und von den übrigen Schaltungsbereichen des Notlichtgeräts, welche auf dem Spannungsniveau der Energiespeichereinheit oder LED liegen, galvanisch getrennt werden muss. Die hierzu erforderliche Potentialtrennung ist nicht nur teuer, sondern beansprucht darüber hinaus auch verhältnismäßig viel Platz in dem Notlichtgerät.

Marcos Alonso J et al. "A microcontroller-based emergency ballast for fluorescent lamps", IEEE Transactions on industrial electronics, IEEE service center, Piscataway, NJ, US Bd. 44, Nr. 2, April 1997, XP011023247, ISSN: 0278-0046 offenbart ein Notlichtvorschaltgerät zum Betreiben einer Leuchtstoffröhre, aufweisend einen Mikrokontroller und einen Lichtsensor zur Erfassung der Lampenspannung, welche zur Durchführung eines Fehlertests verwendet wird.

EP 1 202 428 A1 betrifft ein Notlichtgerät aufweisend eine Batterie, einen Wechselrichter und eine Lampe, wobei das Notlichtgerät ferner eine Steuervorrichtung zur Steuerung des von der Batterie an den Wechselrichter abgegebenen Stromes aufweist, und welche dazu ausgelegt ist, den Strom unabhängig von den Eigenschaften der Lampe auf einem zuvor definierten Wert $I_{max}$ zu halten.

US 2006/066258 A1 offenbart ein Notlichtsystem aufweisend eine Schnittstelle zur Erfassung einer Eingangsspannung, eine Detektionseinheit zur Erfassung eines Stromabfalls in der Eingangsspannung und einen schaltbaren Wandler zur Änderung der Eingangsspannung.

EP 1 507 327 A offenbart eine Notbeleuchtung aufweisend eine Schaltung mit einem Wechselstrom/Gleichstrom-Wandler, einem Gleichstrom/Gleichstrom-Wandler, einem elektronischen Vorschaltgerät und einer elektronischen Regelschaltung, welche die Niedrigvolt-Gleichspannung und/oder den Batteriestrom misst, um einen Ausfall der direkten Netzphase zu detektieren, und welche die Hochvolt-Gleichspannung im Fall des Ausfalls der direkten Netzphase regelt, um den Lampenstrom anzupassen.

GB 2 382 238 A offenbart einen Ladestromkreis für eine Batterie, aufweisend eine Rückführungsanordnung, welche den Ladestand der Batterie mit Hilfe eines Opto-Kopplers ermittelt, der ein Rückführungssignal zur Steuerung des Ladestroms darstellt.

US R E38 183 E1 offenbart eine Synchronisationsvorrichtung für einen Stroboskopalarm, aufweisend eine Vielzahl von Stroboskopschaltungen, welche mit einem Feueralarmsteuerungspanel verbunden sind, wobei die Synchronisationsvorrichtung ausgebildet ist, das Blitzen der Stroboskope an eine vordefinierte Synchronisierungsrate anzupassen.

US 5 847 550 A offenbart eine Schaltung zum konvertieren von Wechselstrom oder Gleichstrom von Ladungen zwischen 70 und 424 Volt in kleinere Ladungen zwischen 2,5 und 18 Volt Gleichspannung zum Laden von Batterien, aufweisend zwei in Reihe geschaltete Flyback-Schaltungen.

US 2006/0082332 A1 offenbart die Verwendung von seriellen Reglern zur Steuerung der Zufuhr eines vorbestimmten Stroms zu LEDs. Dabei stimmt ein Schaltregler eine Ausgangsspannung bezüglich der LEDs in Übereinstimmung mit den gesteuerten Zuständen der seriellen Regler zu der maximalen Spannung ab.

US 7 015 654 B1 offenbart eine Schaltung aufweisend einen Mikrokontroller und Hochsetzsteller zur Bereitstellung eines konstanten Stroms zu einem LED-Array, wobei der Mikrokontroller mit einem Halbleiterschalter verbunden ist und das Tastverhältnis des Halbleiterschalters zur Bereitstellung eines konstanten Stroms unabhängig von der momentanen Batteriespannung modifiziert wird.

Rico-Secades et al: "Evaluation of a Low Cost Permanent Emergency Lighting System based on high efficiency LED's", conference record of the 2003 IEEE industry applications conference (38th IAS annual meeting), Salt Lake City, UT, Oktober 12-16 2003 (12003-10), XP10676072 ISBN: 0-7803-7883-9 offenbart ein Notlichtgerät mit drei hocheffizienten LEDs, welches ausgelegt ist, nach einem Ausfall der Stromversorgung wenigstens 1 Stunde einen Lichtstrom von 30Lm abzugeben.

US 6 502 044 B1 offenbart ein elektronisches Selbstdiagnosesystem für Notlichtgeräte, aufweisend LEDs als Lichtquelle, wobei das System Test- und Diagnosefunktionen an der Schaltung durchführt. Die Testfunktionen werden durch einen programmierbaren Mikroprozessor bereitgestellt, wobei der Diagnoseschaltkreis einen Lade/Transfer-Schaltkreis des Systems steuert.

US 2006/001381 A1 offenbart eine Treiber- und Kontrollschaltung für die Bereitstellung eines Stroms zu wenigstens einer LED, aufweisend wenigstens einen Spannungskonverter, eine Dimmersteuerungseinheit, ein Rückführmittel und wenigstens ein Messmittel, wobei das Rückführmittel mit dem Spannungskonverter und einem Strommessmittel verbunden ist und ein Rückführungssignal an den Spannungskonverter sendet. Basierend auf dem Rückführungssignal kann die Ausgangsspannung des Spannungskonverters angepasst werden.

Basierend auf dem genannten Stand der Technik liegt der vorliegenden Erfindung nunmehr die Aufgabe zugrunde, ein verbessertes Konzept für ein Notlichtgerät anzugeben, bei dem die vorstehend beschriebenen Nachteile vermieden sind.

Diese Aufgabe wird durch ein Notlichtgerät mit den Merkmalen des Anspruchs 1 gelöst. Vorteilhafte Weiterbildungen der Erfindung sind Gegenstand der Unteransprüche.

Kerngedanke der vorliegenden Erfindung ist, dass im Gegensatz zu bekannten Lösungen die Netzversorgungsspannung nunmehr lediglich indirekt überwacht wird, um gegebenenfalls einen Notlichtbetrieb zu veranlassen. Hierzu werden lediglich Messwerte auf einem Potential der Energiespeichereinheit oder der LED erfasst, und auf Basis dieser Messwerte mit Hilfe von weiteren Informationen auf den Zustand der Netzversorgungsspannung zurück geschlossen.

Erfindungsgemäß wird dementsprechend ein Notlichtgerät zum Betreiben einer Lichtquelle, insbesondere einer LED vorgeschlagen, wobei das Notlichtgerät aufweist:

• eine Energiespeichereinheit,
• eine während eines Notlichtbetriebs durch die Energiespeichereinheit versorgte Treiberschaltung zum Betreiben der Lichtquelle, welche einen einen getakteten Schalter umfasst, und

wobei das Gerät ferner eine Steuereinheit aufweist, welche dazu ausgelegt ist, durch Ansteuerung des getakteten Schalters der Treiberschaltung die Leistung oder den Strom durch die Lichtquelle unabhängig vom Ladezustand der Energiespeichereinheit konstant zu regeln, dadurch gekennzeichnet, dass die Steuereinheit dazu ausgelegt ist, zur Regelung der Leistung die Höhe des der Lichtquelle zugeführten Stroms indirekt zu ermitteln, sowie dass die Steuereinheit die Höhe des der Lichtquelle zugeführten Stroms anhand der an der Lichtquelle anliegenden Spannung berechnet.

Durch die erfindungsgemäßen Maßnahmen ist sichergestellt, dass ein sich auf die Spannungsversorgung auswirkender Notzustand nach wie vor zuverlässig erkannt werden und dementsprechend ein Notlichtbetrieb eingeleitet werden kann. Gleichzeitig aber entfällt die erforderliche galvanische Trennung zwischen den Mitteln zur Überwachung der Netzversorgungsspannung und den weiteren Komponenten des Notlichtgeräts, so dass das Gerät insgesamt gesehen kostengünstiger und kompakter realisiert werden kann.

Vorzugsweise weist die Ladeschaltung einen steuerbaren Schalter sowie einen Transformator auf, wobei die Ladeschaltung insbesondere durch einen sogenannten Flyback-Konverter gebildet sein kann. Der steuerbare Schalter wird durch die Steuereinheit des Notlichtgeräts angesteuert, wobei hier die Ansteuerung insbesondere über einen Optokoppler erfolgen kann.

Der Zustand der Netzversorgungsspannung wird nunmehr insbesondere unter Berücksichtigung des von der Steuereinheit gewählten Duty-Cycles zur Ansteuerung des Schalters des Flyback-Konverters bzw. der Ladeschaltung ermittelt. Ferner wird hierzu die Sekundärspannung des Flyback-Konverters bzw. bei anderen Schaltnetzteil-Typologien die Ladeleistung für die Energiespeichereinheit berücksichtigt. Diese Ladeleistung kann während des Ladebetriebs, also bei ausgeschalteter Lichtquelle, in einfacher Weise durch die Steuereinheit ermittelt werden, da die hierzu zu messenden Werte, nämlich Spannung und Strom der Energiespeicherschaltung sich auf das gleiche Basispotential beziehen, auf dem auch die weiteren Komponenten des Notlichtgeräts liegen. Gleiches gilt auch für die im Falle der Verwendung des Flyback-Konverters zu messende Sekundärspannung. In beiden Fällen kann also die beim Stand der Technik erforderliche galvanische Trennung zwischen den Messeinrichtungen und der Steuereinheit entfallen.

Die Treiberschaltung ist als Schaltregler ausgebildet und weist dementsprechend einen weiteren steuerbaren Schalter auf, welcher wiederum durch die Steuereinheit angesteuert wird. Die Ansteuerung des Schalters ist dabei derart, dass die Lichtquelle unabhängig vom Ladezustand der Energiespeichereinheit mit einer konstanten Leistung oder konstantem Strom betrieben werden kann. Diese Maßnahme ist von besonderer Bedeutung, da die Leistung der Energiespeichereinheit selbstverständlich im Laufe der Zeit sinkt, was sich allerdings nicht auf die Lichtintensität des Notlichtgeräts auswirken sollte.

Im Falle der Nutzung einer LED als Lichtquelle wäre es dementsprechend wiederum naheliegend, den Diodenstrom selbst, der die Lichtleistung bestimmt, zu erfassen, um die angestrebte Leistungsregelung zu ermöglichen. Gemäß der vorliegenden Erfindung ist allerdings vorgesehen, dass die Messung des Diodenstroms entfällt und stattdessen der Strom bzw. die Leistung der Lichtquelle anhand anderer Parameter indirekt gemessen bzw. abgeschätzt wird. Insbesondere wird lediglich die an der Lichtquelle anliegende Spannung ermittelt und dann der Diodenstrom aus weiteren Informationen abgeleitet, wobei hierbei insbesondere die Verlustleistung der Treiberschaltung berücksichtigt wird. Mittels zuvor bestimmter Abgleichtabellen kann dann ohne eine direkte Messung des Diodenstroms die Leistung der Lichtquelle bestimmt werden, so dass eine nahezu konstante Lichtleistung durch die Steuereinheit eingestellt werden kann. Die Regelung der Lichtleistung erfolgt hierbei insbesondere durch eine entsprechende Taktung des steuerbaren Schalters der Treiberschaltung, da auf diesem Wege in sehr einfacher und eleganter Weise die Leistung, mit der die Lichtquelle betrieben wird, eingestellt werden kann.

Nachfolgend soll die Erfindung anhand der beiliegenden Zeichnungen näher erläutert werden. Es zeigen:

Fig. 1      schematisch das Schaltbild eines erfindungsgemäßen Notlichtgeräts;

Fig. 2      eine Grafik zur Ermittlung der Netzversorgungsspannung auf Basis von an der Ausgangsseite der Ladeschaltung gemessenen Betriebsparametern und

Fig. 3      eine weitere Grafik zur Ermittlung der Sekundärleistung der Ladeschaltung, welche zur indirekten Bestimmung der Lichtquellenleistung berücksichtigt wird.

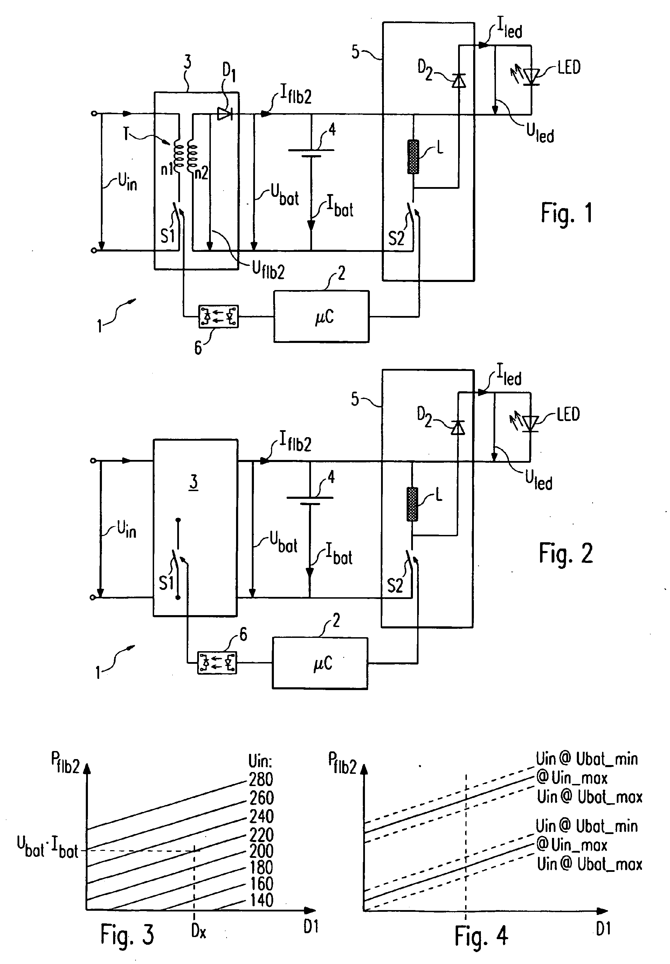

Das in Fig. 1 in vereinfachter Weise dargestellte und allgemein mit dem Bezugszeichen 1 versehene erfindungsgemäße Notlichtgerät ist im dargestellten Ausführungsbeispiel zum Betreiben einer LED als Notlichtquelle vorgesehen. Das Notlichtgerät 1 ist eingangsseitig an ein Stromversorgungsnetz angeschlossen, welches eine Netzversorgungsspannung $U_{in}$ zur Verfügung stellt, und weist als wesentliche Komponenten eine Steuereinheit 2, eine Ladeschaltung 3, eine Energiespeichereinheit 4 in Form einer Batterie bzw. eines Akkumulators sowie eine Treiberschaltung 5 auf. Die Ladeschaltung 3 ist im dargestellten ersten Ausführungsbeispiel durch einen sog. Flyback-Konverter gebildet, der einerseits einen Transformator T mit einer Primärwicklung n1 und einer Sekundärwicklung n2 sowie andererseits einen steuerbaren Schalter S1 aufweist. In bekannter Weise kann durch ein entsprechendes abwechselndes Öffnen und Schließen des Schalter S1 die von der Netzversorgungsspannung $U_{in}$ zur Verfügung gestellte Energie auf die Sekundärseite des Flyback-Konverters 3 übertragen und zum Aufladen der Energiespeichereinheit 4 genutzt werden. Die Energieübertragung findet dabei im geöffneten Zustand des Schalters S1 statt, wobei hierzu auf der Ausgangsseite des Flyback-Konverters 3 ferner eine Diode $D_1$ vorgesehen ist. Derartige Flyback-Schaltungen finden aufgrund ihres einfachen Aufbaus und ihrer zuverlässigen Funktion in derartigen Notlichtgeräten vielfach Verwendung.

Die Ansteuerung des steuerbaren Schalters S1 erfolgt durch die Steuereinheit 2 des Notlichtgeräts, wobei die Ansteuerung insbesondere galvanisch getrennt über einen Optokoppler 6 erfolgt. Die Steuereinheit 2 steuert hierbei den Schalter S1 alternierend an, wobei sich der sog. Duty-Cycle D1 für den Schaltbetrieb des Schalters S1 wie folgt berechnet:

$$D1 = t_{on1} / (T - t_{on1})$$

$t_{on1}$ entspricht hierbei der Einschaltzeit des Schalters, während T die Gesamtdauer eines vollständigen Schaltzyklus für den Schalter S1 bezeichnet.

Denkbar ist auch, dass es sich bei der Ansteuerung von S1 um einen 'Freischwinger' handelt und über den Dutycycle vom Optokoppler 6 die Eigenfrequenz des 'Freischwinger' beeinflusst wird.

Während eines Ladebetriebs des Notlichtgeräts 1 ist üblicherweise ausschließlich die Ladeschaltung 3 aktiv, um die Batterie 4 dauerhaft aufzuladen. Erst für den Fall, dass ein Notzustand vorliegt, der insbesondere durch Abweichungen in der Netzversorgungsspannung $U_{in}$ von vorbestimmten Soll-Werten gekennzeichnet ist, wird ein Notlichtbetrieb eingeleitet, in dem die Treiberschaltung 5 dazu genutzt wird, die LED anzusteuern. Die als Schaltregler ausgebildete Treiberschaltung 5 weist hierzu einen weiteren steuerbaren Schalter S2, eine Induktivität L sowie eine Diode $D_2$ auf. Durch alternierendes Ansteuern des Schalters S2 durch die Steuereinheit 2 wird auf diese Weise der LED ein Strom zur Verfügung gestellt, über welchen diese betrieben wird. Das Tastverhältnis, mit dem der Schalter S2 durch die Steuereinheit 2 angesteuert wird, kann dabei variiert werden, um die Höhe des der LED zugeführten Stroms und damit die Leistung, bei welcher die LED betrieben wird, einzustellen. Auf diese Weise kann in sehr eleganter Weise sichergestellt werden, dass auch bei schwankender Batterieleistung die LED trotz allem mit gleichbleibender Helligkeit betrieben wird.

Eine erste wesentliche Funktion des Notlichtgeräts 1 besteht also darin, durch Beurteilung der Netzversorgungsspannung $U_{in}$ zu erkennen, ob ein Notzustand vorliegt, um ggf. einen Notlichtbetrieb zu veranlassen. Bislang war es bekannt, hierzu unmittelbar den Wert der Eingangsspannung $U_{in}$ für die Ladeschaltung 3 zu bestimmen, was allerdings aus den zuvor genannten Gründen mit Nachteilen verbunden ist.

Gemäß der vorliegenden Erfindung wird deshalb nunmehr auf eine direkte Messung der Netzversorgungsspannung $U_{in}$ verzichtet. Stattdessen ist vorgesehen, diese auf indirektem Wege zu ermitteln. Insbesondere ist vorgesehen, das lediglich Größen von Betriebsparametern des Notlichtgeräts 1 auf der Sekundärseite der Ladeschaltung 3 gemessen werden.

Bei dem ersten Ausführungsbeispiel gemäß Fig. 1 wird hierzu die auf der Sekundärseite des Sperrwandlers bzw. Flyback-Konverters 3 anliegende Spannung $U_{flb2}$ gemessen, wozu insbesondere keine galvanische Trennung erforderlich ist, da diese Größe auf dem gleichen Bezugspotential liegt, wie die Steuereinheit 2, welchen den Messwert auswertet. Ist nun die Höhe dieser Sekundärspannung $U_{flb2}$ bekannt, so kann ausgehend hiervon auf die Höhe der Eingangsspannung $U_{in}$ zurückgeschlossen werden. Bei eingeschaltetem Schalter S1 des Flyback-Konverters 3 besteht nämlich ein Zusammenhang zwischen Eingangsspannung $U_{in}$ und Sekundärspannung $U_{flb2}$, der insbesondere von dem Wicklungsverhältnis zwischen den beiden Wicklungen n1 und n2 des Transformators T sowie von dem Duty-Cycle des Schalters D1 abhängig ist. Dieser Zusammenhang zwischen der einfach zu messenden Sekundärspannung $U_{flb2}$ und der zu überwachenden Eingangsspannung $U_{in}$ ist nunmehr in Form einer Wertetabelle in der Steuereinheit 2 hinterlegt, so dass diese nach Messung der Sekundärspannung $U_{flb2}$ in einfacher Weise die Höhe der Eingangsspannung $U_{in}$ bestimmen kann, ohne diese direkt messen zu müssen. Stellt nun die Steuereinheit 2 fest, dass die ermittelte Eingangsspannung $U_{in}$ außerhalb bestimmter Sollwert-Bereiche liegt, so deutet dies auf einen Notzustand hin, was die Steuereinheit 2 wiederum dazu veranlassen wird, einen Notbetrieb einzuleiten.

Die beschriebene Lösung ermöglicht also eine sehr einfache aber effektive Überwachung des Zustands der allgemeinen Stromversorgung. Ferner besteht ein besonderer Vorteil des in Fig. 1 dargestellten Ausführungsbeispiels darin, dass die Höhe der Eingangsspannung $U_{in}$ unabhängig davon bestimmt werden kann, ob die Notlicht-LED eingeschaltet ist oder nicht. Die Diode $D_1$ bewirkt nämlich durch ihre Sperrwirkung eine Trennung zwischen Sekundärspannung $U_{flb2}$ und Batteriespannung $U_{Bat}$, so dass sich die Tätigkeit der Treiberschaltung 3 nicht auf den vorbeschriebenen Vorgang der Bestimmung der Eingangsspannung $U_{in}$ auswirkt.

Ein zweites, etwas allgemeineres Ausführungsbeispiel eines erfindungsgemäßen Notlichtgeräts ist in Fig. 2 dargestellt. Dieses entspricht in seinem Aufbau im Wesentlichen dem in Fig. 1 gezeigten Notlichtgerät 1, allerdings ist nunmehr die Ladeschaltung 3 nicht durch einen Flyback-Konverter sondern generell durch eine Schaltungsanordnung gebildet, welche eine Potentialtrennung sowie einen wiederum durch die Steuereinheit 2 angesteuerten Schalter S1 aufweist.

Bei dieser allgemeineren Ausführungsform besteht nicht zwangläufig ein bekannter Zusammenhang zwischen der Eingangsspannung $U_{in}$ und der Spannung auf der Ausgangsseite der Ladeschaltung 3. Dennoch kann auch hier die Höhe der Eingangsspannung $U_{in}$ auf indirektem Wege bestimmt werden, wobei hierzu nunmehr allerdings andere Betriebsgrößen gemessen werden.

Es handelt sich hierbei einerseits um die Batteriespannung $U_{bat}$ sowie andererseits um den Batteriestrom $I_{bat}$. Beide Größen können wiederum verhältnismäßig einfach, also ohne galvanische Trennung bestimmt werden, da sie wiederum ebenso wie die Steuereinheit 2, welche diese Messgrößen auswertet, auf dem gleichen Bezugspotential liegen.

Auf Basis dieser beiden Messgrößen $U_{bat}$ und $I_{bat}$ sowie des bekannten Duty-Cycles D1 für den Schalter S1 der Ladeschaltung 3 kann dann die Eingangsspannung $U_{in}$ bestimmt werden, da diese mit den drei bekannten Größen in einer Beziehung steht. Dies verdeutlicht die Grafik von Fig. 3, welche unterschiedliche Kennlinien der Sekundärleistung $P_{flb2}$ der Ladeschaltung 3 in Abhängigkeit von dem Duty-Cycle D1 für den Schalter S1 zeigt. Diese Kennlinien werden beispielsweise bei der Herstellung des Notlichtgeräts ermittelt und wiederum in Form einer Tabelle in der Steuereinheit 2 hinterlegt. Es ist erkennbar, dass diese Kennlinien insbesondere auch von der Eingangsspannung $U_{in}$ abhängig sind. Sind nunmehr also der Duty-Cycle D1 sowie die Sekundärleistung $P_{flb2}$ der Ladeschaltung 3 bekannt, so kann ebenso wie bei dem Beispiel von Fig. 1 auf die Höhe der Eingangsspannung $U_{in}$ zurück geschlossen werden.

Im dargestellten Beispiel von Fig. 3 wird also ermittelt, mit welcher Kennlinie die bekannte Kombination aus Duty-Cycle D1 und Sekundärleistung $P_{flb2}$ der Ladeschaltung 3, welche bei deaktivierter Treiberschaltung 5 dem Produkt aus Batteriespannung $U_{bat}$ und Batteriestrom $I_{bat}$ entspricht, übereinstimmt. Bei den dargestellten Messwerten beispielsweise liegt dieser Wert auf der Kennlinie für eine Eingangsspannung $U_{in}$ von 220 Volt, was einem ordnungsgemäßen Zustand der allgemeinen Netzversorgung entspricht. Würde allerdings der ermittelte Wert auf einer Kennlinie liegen, die beispielsweise einer Eingangsspannung $U_{in}$ von 140 Volt oder 280 Volt entspricht, so würde dies die Steuereinheit 2 wiederum dahingehend interpretieren, dass ein Fehler in der Netzversorgung vorliegt und dementsprechend einen Notzustand einleiten.

In beiden gezeigten Ausführungsbeispielen kann also zuverlässig und ohne das Erfordernis einer direkten Messung der Eingangsspannung $U_{in}$ festgestellt werden, ob die Netzversorgung in Ordnung ist oder nicht. Eine Einschränkung bei dem Beispiel von Fig. 2 besteht allerdings darin, dass die beschriebene Bestimmung der Eingangsspannung $U_{in}$ nur im ausgeschalteten Zustand der Treiberschaltung $_5$ möglich ist. Bei dem Beispiel von Fig. 1 hingegen besteht diese Einschränkung - wie bereits erwähnt - nicht. Grundsätzlich allerdings wird die Steuereinheit 2 im Falle des Erkennens eines Fehlers eine Aktivierung der Treiberschaltung 5 und dementsprechend ein Einschalten der LED veranlassen.

Nach Aktivieren der Treiberschaltung 5 kann dann in der zuvor beschriebenen Weise der Schalter S2 hochfrequent angesteuert werden, um die LED mit einer gewünschten Leistung zu betreiben. Um in diesem Fall sicherzustellen, dass die Leistung der LED konstant ist, wäre es erforderlich, sowohl die LED-Spannung $U_{led}$ als auch den LED-Strom $I_{led}$ zu kennen, um eine Regelung zu ermöglichen. Gemäß einer besonderes vorteilhaften Weiterbildung wird allerdings lediglich die LED-Spannung $U_{led}$ gemessen und der Strom $I_{led}$ bzw. die sich damit ergebende Leistung $P_{led}$ durch die Steuereinheit 2 indirekt ermittelt, was nachfolgend näher erläutert werden soll.

Um den Diodenstrom $I_{led}$ indirekt bestimmen zu können, werden nunmehr zumindest die Größen Batteriespannung $U_{bat}$, Batteriestrom $I_{bat}$ und - Falle des Beispiels von Fig. 1 - Sekundärspannung $U_{flb2}$ sowie zusätzlich die LED-Spannung $U_{led}$ gemessen. Hieraus können dann die weiteren Informationen, welche zur Regelung des LED-Stroms $I_{led}$ benötigt werden, berechnet werden, wozu allerdings noch weitere Informationen erforderlich sind, welche nicht durch Istwert-Messungen erfasst werden, sondern als Wertetabellen in der Steuereinheit 2 hinterlegt sind.

Die erste Wertetabelle ist die bereits oben erwähnte Information hinsichtlich des Zusammenhangs zwischen Duty-Cycle D1, Sekundärspannung $U_{flb2}$ und Eingangsspannung $U_{in}$ bei dem Beispiels von Fig. 1 bzw. zwischen Duty-Cycle D1, Batteriespannung $U_{bat}$, Batteriestrom $I_{bat}$ und Eingangsspannung $U_{in}$ bei dem allgemeineren Beispiel von Fig. 2. Ferner muss zum Ermitteln des Diodenstroms auch die Verlustleistung $P_{lost}$ der Treiberschaltung 5 bekannt sein, welche von der Differenz zwischen der gemessenen LED-Spannung $U_{led}$ und der ebenfalls gemessenen Batteriespannung $U_{bat}$ abhängig ist, so dass gilt:

$$P_{lost} = f\left(U_{led} - U_{bat}\right)$$

Die dritte benötigte Information schließlich ist die im Falle einer aktivierten Treiberschaltung vorliegende Sekundärleistung $P_{flb2}$ der Ladeschaltung 3, welche eine Funktion des Duty-Cycles D1, der Eingangsspannung $U_{in}$ sowie der Batteriespannung $U_{bat}$ ist. Der Zusammenhang zwischen diesen Größen ist in Fig. 4 dargestellt, wobei erkennbar ist, dass die Sekundärleistung $P_{flb2}$ der Ladeschaltung 3 primär von der Eingangsspannung $U_{in}$ und dem Duty-Cycle D1 für den Schalter S1 abhängig ist, darüber hinaus allerdings auch noch auf Grund der Batteriespannung $U_{bat}$ variieren kann.

Ist nun aufgrund der zuvor beschriebenen Maßnahmen die Eingangsspannung $U_{in}$ (ggf. bei dem Beispiel von Fig. 2 zunächst bei abgeschalteter Treiberschaltung 5) ermittelt worden, so kann anhand des Zusammenhangs in Fig. 4 auch bei aktivierter Treiberschaltung 5 die Sekundärleistung $P_{flb2}$ der Ladeschaltung 3 ermittelt werden. Bekannt sind dann also die gemessenen Größen Batteriespannung $U_{bat}$, Batteriestrom $I_{bat}$, ggf. Sekundärspannung $U_{flb2}$ und LED-Spannung $U_{led}$, der durch die Steuereinheit vorgegebene Duty-Cycle D1 für den Schalter S1, sowie die anhand der hinterlegten Wertetabellen bestimmten weiteren Größen Eingangsspannung $U_{in}$, Sekundärleistung $P_{flb2}$ der Ladeschaltung 3 sowie Verlustleistung $P_{lost}$ der Treiberschaltung 5.

Die Kenntnis dieser Größen wiederum ermöglicht gemäß dem folgenden Zusammenhang zunächst die Bestimmung des Stroms $I_{flb2}$ auf der Sekundärseite der Ladeschaltung 3:

$$I_{flb2} = P_{flb2} / U_{bat}$$

Schließlich können auch der LED-Strom $I_{led}$ und die LED-Leistung $P_{led}$ nach folgenden Gleichungen berechnet werden:

$$I_{led} = \left(P_{flb2} - U_{bat} \cdot I_{bat} - P_{lost}\right) / U_{led}$$

$$P_{led} = P_{flb2} - U_{bat} \cdot I_{bat} - P_{lost}$$

Beide Gleichungen gelten für den Fall, dass die Ladeschaltung 3 nach wie vor aktiv ist, also zumindest noch eine gewisse Stromversorgung zur Verfügung steht. Dies kann beispielsweise der Fall sein, wenn ein Notlichtbetrieb anderweitig veranlasst wurde. Für den Fall hingegen, dass die Stromversorgung vollständig ausfällt und der Notlichtbetrieb ausschließlich durch die Batterie aufrechterhalten wird, gelten die vereinfachten Gleichungen:

$$I_{led} = \left(U_{bat} \cdot I_{bat} - P_{lost}\right) / U_{led}$$

$$P_{led} = U_{bat} \cdot I_{bat} - P_{lost}$$

Letztendlich können also der aktuelle Ist-Wert des LED-Stroms $I_{led}$ sowie die aktuelle Leistung $P_{led}$ auf indirektem Wege ermittelt und zur Regelung genutzt werden. Die entsprechenden Berechnungen werden durch die Steuereinheit 2 durchgeführt.

Der Vorteil dieser indirekten Bestimmungen der zur Regelung erforderlichen Istwerte besteht darin, dass auf eine Messung eines zusätzlichen Betriebsparameters des Notlichtgeräts verzichtet werden kann, was wiederum zu einer weiteren Vereinfachung des Geräts insgesamt führt. Da hierbei ohnehin zum Teil auf bereits zur Bestimmung der Eingangsspannung ermittelte bzw. gemessene Parameter zurückgegriffen werden kann, stellt diese indirekte Bestimmung des LED-Stroms also eine besonders vorteilhafte Weiterbildung des eingangs beschriebenen Gedankens der indirekten Bestimmung der Eingangspannung dar. Allerdings könnte eine entsprechende indirekte Strom- und Leistungsbestimmung für die Lichtquelle auch bei anderen Geräten zum Einsatz kommen, bei denen der erste erfindungsgemäße Gedanke nicht verwirklicht ist. Beispielsweise ist diese Vorgehensweise u.a. bei Notlichtgeräten sinnvoll, bei denen ein Notzustand alternativ oder ergänzend zur Überwachung der Stromversorgung auch anderweitig signalisiert werden kann. So könnte bei dem erfindungsgemäßen Notlichtgerät beispielsweise auch über einen separaten Steuereingang ein Notsignal z.B. von einem Feuermelder oder einer anderen Steuereinrichtung übermittelt werden, um durch ein externes Signal einen Notlichtbetrieb zu veranlassen.

Eine andere Weiterbildung schließlich betrifft die zuvor erwähnten und in der Steuereinheit hinterlegten Wertetabellen, welche zur indirekten Bestimmung der Eingangsspannung und des Dioden-Stroms erforderlich sind. Wie bereits erwähnt wurde, können diese Wertetabellen bereits bei der Herstellung des Notlichtgeräts in der Steuereinheit gespeichert werden. Alternativ oder ergänzend hierzu wäre es allerdings auch denkbar, diese Informationen nachträglich einzuschreiben bzw. zu einem späteren Zeitpunkt zu aktualisieren. Hierfür könnte z.B. ein in dem Notlichtgerät vorgesehenes digitales Interface genutzt werden, welches üblicherweise zur Fehlersignalisierung und Überwachung genutzt wird. Mit Hilfe dieses Interfaces könnten nunmehr unter Nutzung eines erweiterten Befehlssatzes neue Wertetabellen in die Steuereinheit eingeschrieben werden. Dieses nachträgliche Einschreiben neuer Informationen ist beispielsweise sinnvoll, um neue Soll- bzw. Tolleranzwerte für die Eingangsspannung vorzugeben oder auch die Informationen zur Ermittlung der nicht direkt gemessenen Größen an die angeschlossene Batterie anzupassen. Hierdurch kann also das Notlichtgerät hinsichtlich seines Verhaltens jederzeit an neue Umstände angepasst werden.

Insgesamt gesehen wird somit durch die vorliegende Erfindung ein neuartiges Notlichtgerät bereitgestellt, welches sich durch seinen einfachen und kostengünstig zu realisierenden Aufbau auszeichnet und trotz allem in zuverlässiger Weise die Feststellung eines Notfalles durch Überwachung der allgemeinen Netzversorgung ermöglicht. Darüber hinaus ist durch die vorteilhafte Regelung des Diodenstroms eine konstante Lichtabgabe über die Dauer eines Notbetriebs hinweg sichergestellt.

**Patentansprüche**

1. Notlichtgerät zum Betreiben einer Lichtquelle, insbesondere einer LED, wobei das Notlichtgerät (1) aufweist:

   • eine Energiespeichereinheit (4), sowie
   • eine während eines Notlichtbetriebs durch die Energiespeichereinheit (4) versorgte Treiberschaltung (5) zum Betreiben der Lichtquelle, welche einen einen getakteten Schalter (S2) umfasst, und

   wobei das Notlichtgerät (1) ferner eine Steuereinheit (2) aufweist,
   **dadurch gekennzeichnet, dass**
   die Steuereinheit (2) dazu ausgelegt ist, durch Ansteuerung des getakteten Schalters (S2) der Treiberschaltung (5) die Leistung ($P_{led}$) oder den Strom ($I_{led}$) durch die Lichtquelle unabhängig vom Ladezustand der Energiespeichereinheit (4) konstant zu regeln,
   dass die Steuereinheit (2) dazu ausgelegt ist, zur Regelung der Leistung ($P_{led}$) die Höhe des der Lichtquelle zugeführten Stroms ($I_{led}$) indirekt zu ermitteln, sowie
   dass die Steuereinheit (2) die Höhe des der Lichtquelle zugeführten Stroms ($I_{led}$) anhand der an der Lichtquelle anliegenden Spannung ($U_{led}$) berechnet.

2. Notlichtgerät nach Anspruch 1,
   **dadurch gekennzeichnet,**
   **dass** die Steuereinheit (2) dazu ausgelegt ist, bei der Berechnung des der Lichtquelle zugeführten Stroms ($I_{led}$) die Verlustleistung ($P_{lost}$) der Treiberschaltung (5) zu berücksichtigen.

3. Notlichtgerät nach Anspruch 2,
   **dadurch gekennzeichnet,**
   **dass** in der Steuereinheit eine Wertetabelle hinterlegt ist, und
   **dass** die Steuereinheit (2) dazu ausgelegt ist,
   die Verlustleistung ($P_{lost}$) der Treiberschaltung (5) durch Vergleich gemessener Betriebsgrößen des Notlichtgeräts (1) mit der Wertetabelle durchzuführen.

**4.** Notlichtgerät nach Anspruch 2 oder 3, **dadurch gekennzeichnet, dass** die Steuereinheit (2) bei der Berechnung des der Lichtquelle zugeführten Stroms ($I_{led}$) ferner die Sekundärleistung ($P_{flb2}$) der bzw. einer Ladeschaltung (3) für die Energiespeichereinheit (4) berücksichtigt.

**5.** Notlichtgerät nach Anspruch 4, **dadurch gekennzeichnet, dass** in der Steuereinheit (2) eine weitere Wertetabelle hinterlegt ist, und **dass** die Steuereinheit dazu ausgelegt ist, die Ermittlung der Sekundärleistung ($P_{flb2}$) der Ladeschaltung (3) durch Vergleich gemessener Betriebsgrößen des Notlichtgeräts (1) mit der Wertetabelle durchzuführen.

**6.** Notlichtgerät nach Anspruch 4 oder 5, **dadurch gekennzeichnet, dass** dieses ein Interface zum Empfangen externer Informationen zur Programmierung und/oder Aktualisierung der in der Steuereinheit (2) hinterlegten Wertetabelle(n) aufweist.

**Claims**

**1.** Emergency lighting device for operating a light source, in particular an LED, the emergency lighting device (1) having:

• an energy storage unit (4), and
• a driver circuit (5) for operating the light source, said driver circuit being supplied by the energy storage unit (4) during an emergency lighting operating mode and comprising a clocked switch (S2), and

the emergency lighting device (1) also having a control unit (2), **characterized in that** the control unit (2) is designed to constantly regulate the power ($P_{led}$) or the current ($I_{led}$) through the light source independently of the state of the charge of the energy storage unit (4) by driving the clocked switch (S2) of the driver circuit (5), **in that** the control unit (2) is designed to determine indirectly the level of the current ($I_{led}$) supplied to the light source in order to regulate the power ($P_{led}$), and **in that** the control unit (2) calculates the level of the current ($I_{led}$) supplied to the light source using the voltage ($U_{led}$) applied to the light source.

**2.** Emergency lighting device according to Claim 1, **characterized in that** the control unit (2) is designed to take into consideration the power loss ($P_{lost}$) of the driver circuit (5) in the calculation of the current ($I_{led}$) supplied to the light source.

**3.** Emergency lighting device according to Claim 2, **characterized in that** a value table is stored in the control unit, and **in that** the control unit (2) is designed to perform the determination of the power loss ($P_{lost}$) of the driver circuit (5) by comparing measured operating variables of the emergency lighting device (1) with the value table.

**4.** Emergency lighting device according to Claim 2 or 3, **characterized in that** the control unit (2) also takes into consideration the secondary power ($P_{flb2}$) of the or a charging circuit (3) for the energy storage unit (4) in the calculation of the current ($I_{led}$) supplied to the light source.

**5.** Emergency lighting device according to Claim 4, **characterized in that** a further value table is stored in the control unit (2), and **in that** the control unit is designed to perform the determination of the secondary power ($P_{flb2}$) of the charging circuit (3) by comparison of measured operational variables of the emergency lighting device (1) with the value table.

**6.** Emergency lighting device according to Claim 4 or 5, **characterized in that** said emergency lighting device has an interface for receiving external information for programming and/or updating the value table(s) stored in the control unit (2).

**Revendications**

**1.** Appareil d'éclairage de secours pour faire fonctionner une source de lumière, en particulier une LED, l'appareil d'éclairage de secours (1) présentant :

- une unité de stockage d'énergie (4), ainsi que
- un circuit d'attaque (5), qui est alimenté pendant le fonctionnement en éclairage de secours par l'unité de stockage d'énergie (4), pour faire fonctionner la source de lumière, laquelle comprend un commutateur (S2) cadencé, et

l'appareil d'éclairage de secours (1) présentant en outre une unité de commande (2), **caractérisé en ce que** l'unité de commande (2) est conçue pour, via une commande du commutateur (S2) cadencé du circuit d'attaque (5), régler de manière constante la puissance (Pled) ou le courant (Iled) à travers la source de lumière indépendamment de l'état de charge de l'unité de stockage d'énergie (4),
**en ce que** l'unité de commande (2) est conçue pour déterminer de manière indirecte la valeur du courant (Iled) fourni à la source de lumière dans le but de réguler la puissance (Pled), et
**en ce que** l'unité de commande (2) calcule la valeur du courant (Iled) fourni à la source de lumière à l'aide de la tension (Uled) aux bornes de la source de lumière.

2.  Appareil d'éclairage de secours selon la revendication 1,
    **caractérisé en ce que**
    l'unité de commande (2) est conçue pour, lors du calcul du courant (Iled) fourni à la source de lumière, prendre en compte la puissance dissipée (Plost) du circuit d'attaque (5).

3.  Appareil d'éclairage de secours selon la revendication 2,
    **caractérisé en ce que**
    un tableau de valeurs est stocké dans l'unité de commande, et
    **en ce que** l'unité de commande (2) est conçue pour exécuter la puissance dissipée (Plost) du circuit d'attaque (5) par comparaison de valeurs de fonctionnement mesurées de l'appareil d'éclairage de secours (1) avec le tableau de valeurs.

4.  Appareil d'éclairage de secours selon la revendication 2 ou 3,
    **caractérisé en ce que**
    l'unité de commande (2) prend en compte, lors du calcul du courant (Iled) fourni à la source de lumière, en outre la puissance secondaire (Pflb2) du ou d'un circuit de chargement (3) pour l'unité de stockage d'énergie (4).

5.  Appareil d'éclairage de secours selon la revendication 4,
    **caractérisé en ce que**,
    un autre tableau de valeurs est stocké dans l'unité de commande (2), et
    **en ce que** l'unité de commande est conçue pour réaliser la détermination de la puissance secondaire (Pflb2) du circuit de chargement (3) par comparaison de valeurs de fonctionnement mesurées de l'appareil d'éclairage de secours (1) avec le tableau de valeurs.

6.  Appareil d'éclairage de secours selon la revendication 4 ou 5,
    **caractérisé en ce que** celui-ci comprend une interface pour la réception d'informations extérieures pour la programmation et/ou l'actualisation du ou des tableau(x) stocké(s) dans l'unité de commande (2).

Fig. 1

Fig. 2

Fig. 3

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1202428 A1
- US 2006066258 A1
- EP 1507327 A
- GB 2382238 A
- US RE38183 E1
- US 5847550 A
- US 20060082332 A1
- US 7015654 B1
- US 6502044 B1
- US 2006001381 A1

**In der Beschreibung aufgeführte Nicht-Patentliteratur**

- **Marcos Alonso J et al.** A microcontroller-based emergency ballast for fluorescent lamps. *IEEE Transactions on industrial electronics,* April 1997, vol. 44 (2

- **Rico-Secades et al.** Evaluation of a Low Cost Permanent Emergency Lighting System based on high efficiency LED's. *conference record of the 2003 IEEE industry applications conference (38th IAS annual meeting),* 12. Oktober 2003